# EUROPEAN PATENT SPECIFICATION

(11) **EP 0 536 809 B1**
(45) Date of publication and mention of the grant of the patent: **20.12.1995**
(21) Application number: 92119811.5
(22) Date of filing: 12.10.1989
(51) Int. Cl.: F16H 7/12

(54) **Compact automatic belt tensioner**
Kleinbauender, automatischer Riemenspanner
Tendeur de courroie automatique et compact

(30) Priority: 13.10.1988 JP 258870/88; 15.12.1988 JP 318201/88
(43) Date of publication of application: 14.04.1993
(62) Divisional of application: 89310485.1
(73) Proprietor: MITSUBOSHI BELTING LTD., Nagata-ku Kobe City Hyogo, pref. (JP)
(72) Inventor: Hirai, Hideo, Kakogawa-shi, Hyogo (JP); Ando, Masakatsu, Suma-ku, Kobe, Hyogo (JP); Hashimoto, Yasuhiro, Midorigaokachonishi, Miki-shi (JP); Fujimoto, Naoki, Kobe, Hyogo (JP); Tanaka, Norikazu, Nishiyodogawa-ku, Osaka-shi (JP); Yamakawa, Susumu, Kita-ku, Kobe, Hyogo (JP)
(74) Representative: Bond, Bentley George

(56) References cited:
- EP-A- 0 188 077
- EP-A- 0 361 899
- DE-C- 3 716 571
- FR-A- 2 624 577
- US-A- 4 661 087
- US-A- 4 698 049
- US-A- 4 826 471

## Description

This invention relates to an automatic drive belt tensioning apparatus and, more particularly, to an apparatus of the type having a pivotable tensioner arm with an idler pulley thereon which is borne against an unsupported portion of a drive belt to create a predetermined tension thereon as defined by the features of the first part of claim 1. Such a tensioning apparatus is known from US-A 4 661 087.

It is conventional to use a belt tensioning apparatus on drive belt systems such as those in the automobile industry. The automobile systems are generally characterized as serpentine belt systems. In such systems, an endless belt is trained in a circuitous path about a plurality of accessories, such as pumps, alternators, etc. The belt frictionally drives pulleys associated with shafts on the accessories. For the accessories to operate consistently and effectively, it is necessary for the frictional drive force developed on the accessory pulleys to be relatively constant. This is conventionally accomplished by producing a predetermined tension on the belt through a belt tensioning apparatus.

Typically, such tensioners employ hydraulic or pneumatic mechanisms, rubber and a steel spring or resin, etc. to impart a desired tension on the belt through compression, tension, bending, or twisting.

One objective of automobile designers is to maximize the passenger compartment space and minimize the compartment space for the engine. With the premium on space in the engine compartment, it is important that all engine components, including the belt tensioner, be made as small as possible without compromising the operation thereof.

As a rule, prior art tensioners have had a very substantial dimension both axially and radially with respect to the pivot axis for the tensioner arm. For example, US-A 4,473,362 shows a belt tensioning apparatus with a coil spring 44 that exerts a torsional bias on a tensioner arm 78 to thereby bear an idler pulley 42 on the end of the arm 78 against a drive belt. Due to the large torsional force that the coil spring 44 must develop, the wire from which the spring 44 is formed is heavy gauge. The required torque that must be produced also necessitates a large number of coil turns with relatively large radii. The spring 44 must also have considerable strength axially thereof to perform a biasing function as part of a damping mechanism. The result is that the overall dimensions of the belt tensioning apparatus become quite large to accommodate the spring 44.

One further prior art, US-A 4,285,676, resorts to the use of multiple springs to produce the desired forces. The resulting dimensions of the tensioning apparatus, particularly radially of the tensioner arm pivot axis, become quite large.

The space problems are further aggravated by the provision in certain prior art structures, such as that in the above Thomey et al patent, of damping mechanisms to control pivoting of the tensioner arm. This damping feature is generally incorporated to prevent tensioner arm backlash and vibrations that may cause a resonant condition in the drive belt and/or tensioning apparatus, as may occur with abrupt acceleration in automobiles.

One such damping mechanism is shown in US-A 4,362,525 and has a damping mechanism 58 that is spaced a considerable distance away from the structure for biasing the tensioner arm 25 and associated idler pulley 35. This necessitates the provision of a large mounting bracket 10 which competes with other engine accessories for space.

The damping mechanism in the generic US-A 4,661,087 employs a piston or blade to be operated in a liquid to create a damping force. A considerable amount of space is required for this mechanism as well.

### Summary of the Invention

The present invention is specifically directed to overcoming the above enumerated problems in a novel and simple manner.

The present invention is also concerned with minimizing the size of a damping mechanism for the tensioner arm.

The tensioner arm as defined by the features of claim 1 has a mounting body with a first wall having a first surface facing in a first axial direction. The mounting structure for the tensioner arm has a second wall with a second surface facing the first surface. The mounting body has a third surface facing axially oppositely to the first direction to coact with a friction producing surface on the mounting structure. The torsion coil spring is compressed between the first and second surfaces and urges the third surface against the friction producing surface on the mounting structure to damp pivoting movement of the tensioner arm.

A friction plate is mounted for axial movement relative to the mounting structure and fixed against rotation relative thereto. Structure independent of the torsion coil spring biases the friction plate axially towards a part of the tensioner arm to damp pivoting of the tensioner arm. A friction element, preferably of nylon resin, is interposed between the friction plate and the part of the tensioner arm.

To compact the overall system, the friction plate has a stepped cylindrical configuration with a first portion having a first diameter and a second portion with a second diameter that is larger than the first diameter. A coil spring surrounds the first friction plate portion and bears against an axially facing surface on the second portion of the friction plate.

The invention also contemplates a simple and compact structure for positively holding the ends of coil springs used to create torsion between the tensioner arm and mounting structure therefor. To accomplish this, there is a pin and socket arrangement between one spring end and the mounting structure and a like arrangement between the other spring end and tensioner arm. Alternatively, bores can be provided in the tensioner arm and mounting structure to receive the spaced coil spring ends. A still further alternative is the provision of posts on the tensioner arm and mounting structure against which the spring ends can releasably bear as the spring is loaded during assembly.

Reference will now be made, by way of example, to the drawings in which:
Fig. 1 is a schematic representation of a serpentine belt system in an automobile, with a belt tensioning apparatus according to the present invention incorporated therein;
Fig. 2 is a side elevation view in section of a belt tensioning apparatus not according to the present invention but according to the invention outlined in earlier European application 89310485.1 published as EP-A 364 277;

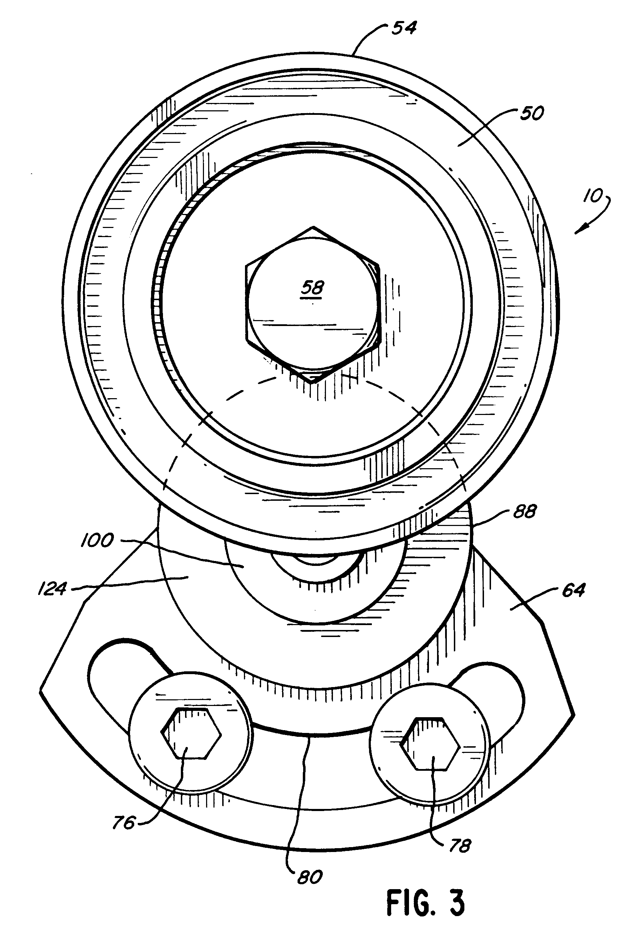

Fig. 3 is an end view of the belt tensioning apparatus of Fig. 2;
Fig. 4 is an enlarged, fragmentary view of a coil spring, partially in section, used to create a torsional biasing force on a tensioner arm on the belt tensioning apparatus of Fig. 2;
Fig. 5 is an enlarged fragmentary view showing an arrangement for abutting one end of the torsion coil spring of Fig. 4 to allow loading thereof;
Fig. 6 is a view as in Pig. 5 with a pin and slot arrangement for the coil spring ends, which is an alternative to the Fig. 5 arrangement; and
Fig. 7 is a side elevation view in section of a form of belt tensioning apparatus according to the present invention being a divisional application on said pending earlier European application 89310485.1.

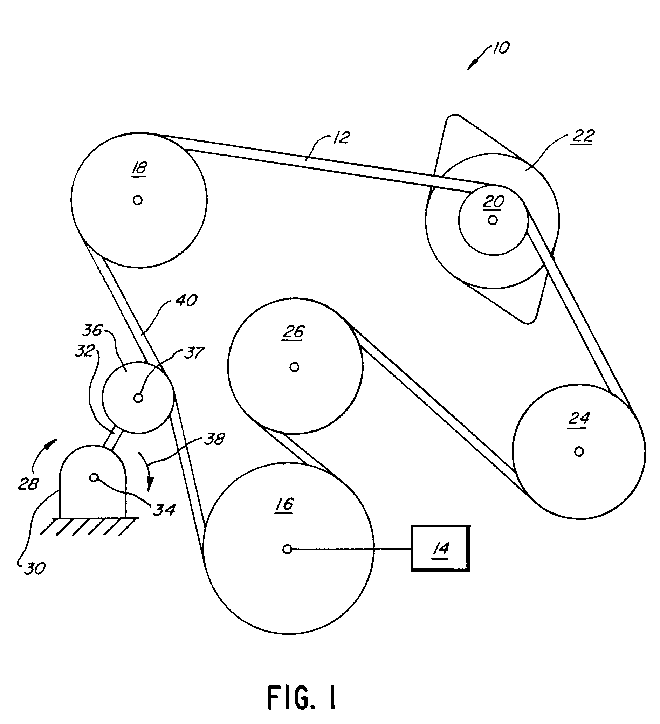

An exemplary system with which an automatic belt tensioner, according to the present invention, can be incorporated, is shown in Fig. 1 at 10. The system 10 is what is generally characterized as a serpentine belt system wherein a single, endless belt 12 drives, in this particular system, four separate automobile accessories. An engine 14 operates, through a drive shaft (not shown), a driving pulley 16 which, through belt 12, drives a pulley 18 which is operatively connected to an air pump (not shown), a pulley 20 on the operating shaft of an alternator 22, a pulley 24 on a shaft which operates a power steering unit (not shown), and a pulley 26 operatively connected to the shaft of a water pump (not shown) for the engine 14.

The inventive belt tensioner, shown schematically in Fig. 1 at 28, has a fixed support 30, to which a tensioner arm 32 is attached for pivoting movement in first and second opposite directions, about a pivot axis 34. The tensioner arm 32 carries at its end an idler pulley 36, that is rotatable about an axis 37, which is parallel to the tensioner arm pivot axis 34. The tensioner arm 32 is resiliently biased in rotation in the direction of arrow 38 to bear the idler pulley 36 against an unsupported belt portion 40 between the driving pulley 16 and driven pulley 18, with a force calculated to cause a constant predetermined tension to be applied to the belt 12.

At startup of the engine 14 and the driving pulley 16, there is a tendency of the belt portion 40 to thrust the idler pulley 36 so as to pivot the tensioner arm 32 oppositely to the direction of arrow 38. Abrupt movement of the tensioner arm 32 oppositely to the direction of arrow 38 is undesirable and is prevented by the structure of the present invention, as described in detail below.

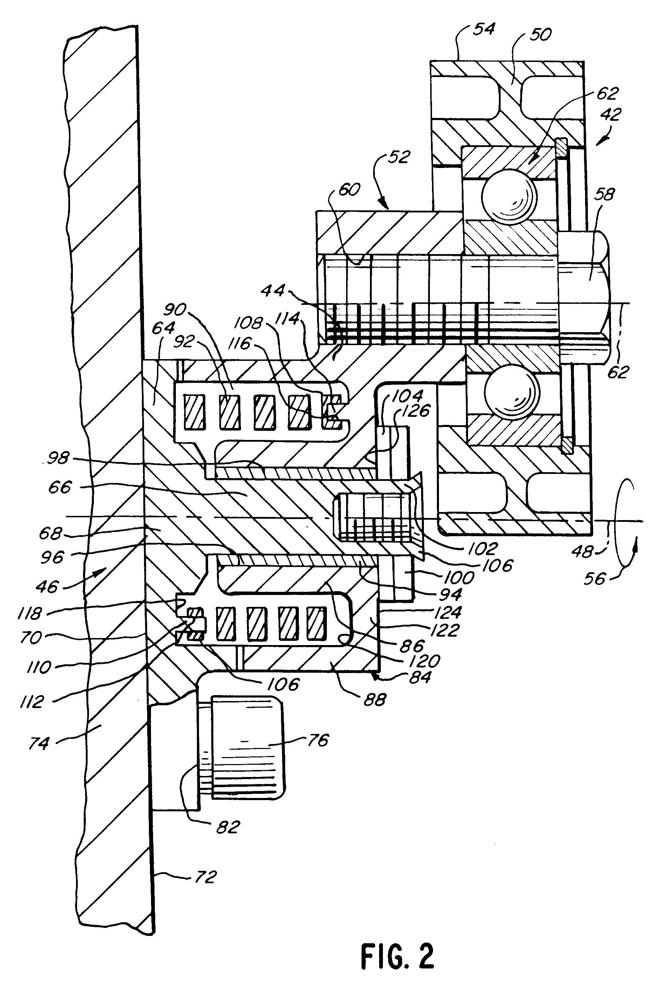

One form of belt tensioning apparatus, not according to the present invention, is shown at 42 in Fig. 2 and consists of a tensioner arm 44, which is rotatable relative to mounting structure, shown generally at 46, for rotation in first and second opposite directions about pivot axis 48. The tensioner arm 44 has an idler pulley 50 on its one end 52. The idler pulley 50 has a peripheral surface 54 which, in operation, is rotatably biased against a drive belt in the direction of arrow 56.

The idler pulley 50 is journaled for rotation on the arm end 52 and is maintained in operative position by a bolt 58 which extends into a threaded bore 60 in the arm end 52. A ball bearing 62 on the arm end 52 assures smooth rotation of the idler pulley 50 about its rotational axis 62.

The mounting structure 46 for the tensioner arm 44 consists of a mounting plate 64 with a shaft 66 extending axially therefrom in cantilever fashion. The mounting plate 64 has a wall 68 with a flat surface 70 that is placed facially against the flat surface 72 of a fixed support 74.

The plate 64 is held against the support 74 by two bolts 76, 78, threaded into bores (not shown) in the support 74. The bolts 76, 78 extend through an arcuate slot 80 in the plate 64. The bolts 76, 78 each have enlarged heads with shoulders 82 that bear the plate 64 rigidly against the support surface 72. The arcuate slot 80 permits rotational adjustment of the position of the tensioning apparatus 42 relative to the belt (not shown).

The tensioner arm 44 has an integral mounting portion 84 which attaches to the mounting shaft 66. The mounting portion 84 has a generally cylindrical configuration with a radially inner wall 86 and a concentric outer wall 88, which walls cooperatively bound an annular space 90 for a torsion coil spring 92.

The mounting portion 84, in assembly, is directed axially over the mounting shaft 66. A cylindrical bushing 94 is interposed between the radially inwardly facing surface 96 of the inner wall 86 and the radially outwardly facing surface 98 of the shaft 66 and facilitates both rotational and axial movement of the tensioner arm 44 relative to the shaft 66.

The tensioner arm 44 is held on the shaft 66 by a locking washer 100. With the mounting portion 84 of the tensioner arm 44 operatively positioned on the shaft 66, the shaft end 102 projects sufficiently therefrom to accept both the washer 100 and a friction generating washer 104, made preferably of a nylon material. With the mounting portion 84 on the shaft 66 and the washers 100, 104 in place, the shaft end 102 can be deformed radially outwardly at 106 to a diameter greater than the diameter of the bores in the washers 100, 104, to prevent the escape thereof off of the end 102 of the shaft 66.

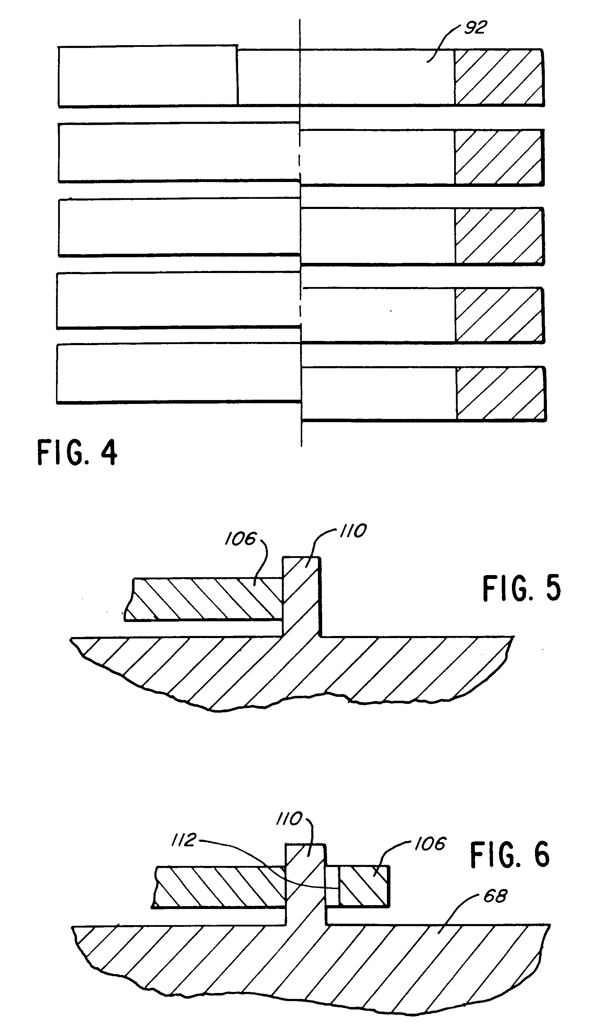

Biasing of the tensioner arm 44 in the direction of arrow 56 in Fig. 2 is accomplished by the coil spring 92. The coil spring 92 has spaced ends 106, 108 which are respectively attached to the mounting wall 68 and tensioner arm 44. Figs. 2 and 6 show preferred structure for attached the spring ends 106, 108. A pin 110 projects axially from the wall 68 and into a socket 112 in the pin end 106. A similar pin 114 on the tensioner arm 44 is received in a socket 116 in the other pin end 108. By securing the pin ends 106, 108, as described, the spring 92 can be preloaded, by rotation of the tensioner arm 44, to produce a desired torque on the tensioner arm 44 in the direction of arrow 56.

The wire from which the spring 92 is formed be square or rectangular in cross section. The spring 92 is inherently more rigid than a spring made from a corresponding wire of circular cross section, as is conventionally used. Less turns in a smaller radius are required for the spring 92 than a corresponding spring made of circular spring wire. This diminishes both the axial and radial dimensions of the spring 92 which results in a corresponding reduction in the overall size of the tensioning apparatus 42.

In addition to producing the required torque on the tensioner arm 44, the spring 92, in the Fig. 2 embodiment, also causes a damping force to be produced to control pivoting of the tensioner arm 44. The coil spring 92 is compressed between an axially facing surface 118 on the wall 68 and a facing wall surface 120 on a wall portion 122 connecting between the inner wall 86 and outer wall 88 on the mounting portion 84. The spring 92 thereby biases a third surface 124 on the mounting portion 84 axially against a friction generating surface 126 on the washer 104, which is rigidly backed by the washer 100. The damping force developed between the surface 124 on the mounting portion 84 and the surface 126 on the washer 104 is dictated by the compressive force from the spring 92. As the spring 92 is loaded, its effective axial extent and diameter are reduced. As the tensioner arm 44 pivots oppositely to the direction of arrow 56, the spring 92 is relaxed and thereby effectively lengthens in an axial direction so that the compressive force produced thereby tending to move the mounting portion 86 against the washer 104 is increased. Thus, damping increases progressively as the tensioner arm 44 moves away from a tensioning direction, i.e. oppositely to the direction of arrow 56.

Fig. 5 shows a slightly modified arrangement for fixing the spring ends 106, 108. Instead of having a socket 112 in the spring end 106, the spring end 106 merely abuts the pin 110 without any connection therebetween. The restoring force in the spring end 106 bears the spring end 106 against the post 110.

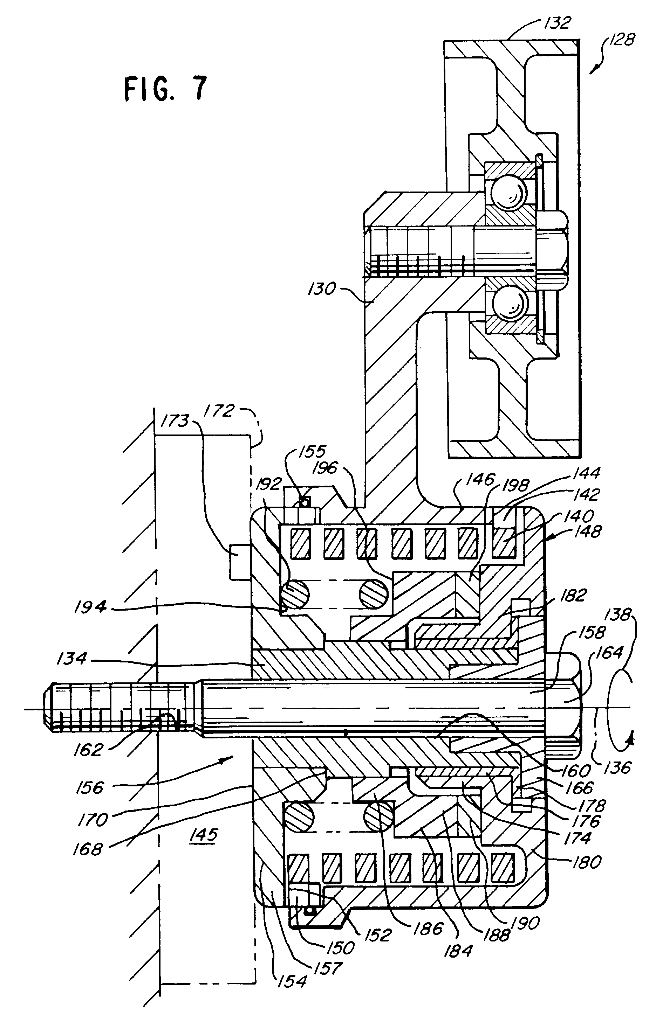

A form of belt tensioning apparatus, according to the present invention, is shown at 128 in Fig. 7. The belt tensioning apparatus 128 has a tensioner arm 130 with an idler pulley 132, that is pivotable about a shaft 134 centered on axis 136. Torque is exerted on the tensioner arm 130 in the direction of arrow 138 by a loaded coil spring 140, made from wire with a non-circular cross section. The coil spring 140 has a free end 142 directed through a bore 144 in a peripheral wall 146 on a mounting portion 148 of the tensioner arm 130. The opposite spring end 150 is directed through a bore 152 in a mounting plate 154, which is rigidly secured to a fixed support 145 for the tensioning apparatus at 128. The wall 146 and a flange 157 on the plate 154 fit one within the other. An annular seal 155 is interposed between a radially enlarged part of the wall 146 and the flange 157 to prevent dust, etc. from migrating between the wall 146 and flange 157.

The mounting structure for the tensioner arm 130 is indicated generally at 156 and includes the mounting plate 154 and the mounting shaft 134. A bolt 158 extends through a bore 160 in the shaft 134 and into a threaded bore 162 in the support 145. The bolt head 164 bears against a stepped bushing 166, which in turn urges the shaft 134 towards the support 145. An annular shoulder 168 on the shaft 134 captively maintains a flat surface 170 on the mounting plate 154 facially against a facing flat surface 172 on the support 145 so that the shaft 134 and mounting plate 154 define a unitary, rigid mounting structure.

The mounting portion 148 of the tensioner arm 130 has an annular inner wall part 174 surrounding the shaft 134. A bushing 176 with a radially projecting annular flange 178 thereon is interposed between the wall part 174 and the shaft 134 to smoothly guide rotation of the tensioner arm 130 around the shaft 134.

As in the prior embodiment, the spring 140 is compressed in an axial direction between the plate 154 and wall 180 of the tensioner arm mounting portion 148 to thereby resiliently bias a wall 182 on the mounting portion 148 against the flange 178 on the bushing 176 which abuts the other bushing 166 that is fixed rigidly to the shaft 134.

According to the invention, a stepped friction plate 184 surrounds the shaft 134. The friction plate 184 has a cylindrical first portion 186, which is suitably keyed to the shaft 134 so as to be movable axially relative thereto but fixed against rotation. The friction plate 184 has a second cylindrical portion 188, integral with the first portion 186, with an annular, axially facing friction gene-rating surface 190.

According to the invention, a coil spring 192 surrounds the first friction plate portion 186 and is compressed between a surface 194 on the mounting plate 154 and an annular shoulder 196 defined by the second friction plate portion 188. The invention, however, contemplates use of other than a coil spring 192, as for example, a leaf spring, and also that the spring might act against an enlarged part (not shown) of the shaft 134 rather than the plate 154. The spring 192 urges the friction plate 184 axially to the right in Fig. 7 towards the mounting portion wall 182. A friction element 198 is interposed between the friction generating surface 190 and the wall 182 and is preferably secured to the wall 182. Preferably, the friction generating element 198 is a high friction material such as nylon resin, phenol resin, fluorine resin, ABS resin, or the like. The spring 192 causes a damping force to be developed between the annular surface 190 and the friction element 198, whereby pivoting movement of the tensioner arm 130 in each direction of rotation is damped.

Rotational damping forces on the tensioner arm are produced cooperatively by the springs 140,192, with the latter damping through the associated friction plate 184 acting against the tensioner arm 130. This redundant damping also diminishes detrimental vibrations as might produce a resonant condition.

It can be seen that the arrangement of the spring 192 and friction plate 184 produces a compact, yet positive acting structure for damping pivoting of the tensioner arm 130.

## Claims

1. An apparatus for tensioning a drive belt (12), said tensioning apparatus comprising:
a tensioner arm (130) having an idler pulley (132) thereon for engagement with a surface of the drive belt;
first means (134,154) for mounting the tensioner arm to a support (145) for pivoting movement in first and second opposite directions relative to the support;
first means (140) for biasing the tensioner arm in one of said first and second directions;
a friction plate (184);
second means for mounting the friction plate to the first mounting means (134,154) for axial movement relative thereto and for fixing the friction plate against rotation relative to the first mounting means; and
second means (192) independent of the first biasing means (140) for biasing the friction plate axially towards a part of the tensioner arm to damp pivoting of the tensioner arm, characterized in that
said friction plate has a stepped cylindrical configuration with a first cylindrical portion (186) having a first diameter and a second cylindrical portion (188) with a second diameter that is larger than the first diameter, the second mounting means mounts the first cylindrical portion (186) to the first mounting means (134,154) and the second cylindrical portion (188) of the friction plate has an annular axially facing surface that is urged axially toward the part of the tensioner arm by the second biasing means (192).

2. The belt tensioning apparatus according to claim 1 wherein said first biasing means comprises a coil spring (140) formed from a piece of wire having a non-circular cross section.

3. The belt tensioning apparatus according to claim 1 including a friction element (198) disposed between the friction plate (184) and the part of the tensioner arm.

4. The belt tensioning apparatus according to claim 1 wherein the second biasing means comprises a coil spring (192) which surrounds the first cylindrical portion (186) of the friction plate and bears against an axially facing surface (196) on the second cylindrical portion (188) of the friction plate.

5. The belt tensioning apparatus according to claim 3 including means for securing the friction element (198) to one of the friction plate (184) and tensioner arm (130).

6. The belt tensioning apparatus according to claim 3 wherein the friction element is a resin material.

7. The belt tensioning apparatus according to claim 1 wherein the first biasing means comprises a coil spring (140) which surrounds the second biasing means (192).

## Patentansprüche

1. Einrichtung zum Spannen eines Antriebsriemens (12), wobei die Spanneinrichtung umfaßt:
einen Spannarm (130), der eine Riemenspannrolle (132) auf dem Arm aufweist, geeignet zum Eingriff in eine Oberfläche des Antriebsriemens;
erste Vorrichtungen (134, 154) zum Montieren des Spannarms an einem Träger (145), geeignet für eine drehbare Bewegung in entgegengesetzte erste und zweite Richtungen relativ zum Träger;
eine erste Vorrichtung (140), geeignet zum Vorspannen des Spannarms in eine der ersten und zweiten Richtungen;
eine Reibungsplatte (184);
zweite Vorrichtungen zum Montieren der Reibungsplatte auf den ersten Montagevorrichtungen (134, 154), geeignet für eine axiale Bewegung relativ dazu und zum Befestigen der Reibungsplatte gegen eine Drehung relativ zu den ersten Montagevorrichtungen; und
eine zweite, von der ersten Vorspannvorrichtung (140) unabhängige Vorrichtung (192), geeignet zum Vorspannen der Reibungsplatte axial auf einen Teil des Spannarms hin, um die Drehung des Spannarms zu dämpfen, dadurch gekennzeichnet,
daß die Reibungsplatte einen gestuften, zylindrischen Aufbau hat mit einem ersten zylindrischen Abschnitt (186), der einen ersten Durchmesser aufweist, und einem zweiten zylindrischen Abschnitt (188) mit einem zweiten Durchmesser, der größer ist als der erste Durchmesser, und daß die zweite Montagevorrichtung den ersten zylindrischen Abschnitt (186) auf den ersten Montagevorrichtungen (134, 154) befestigt, und daß der zweite zylindrische Abschnitt (188) der Reibungsplatte eine ringförmige, zur Achse weisende Oberfläche hat, die die zweite Vorspannvorrichtung (192) axial hin zum Teil des Spannarms zwingt.

2. Riemenspanneinrichtung nach Anspruch 1, wobei die erste Vorspannvorrichtung eine Schraubenfeder (140) umfaßt, geformt aus einem Drahtstück mit nichtkreisförmigem Querschnitt.

3. Riemenspanneinrichtung nach Anspruch 1, umfassend ein Reibungsbauteil (198), das zwischen der Reibungsplatte (184) und dem Teil des Spannarms angeordnet ist.

4. Riemenspanneinrichtung nach Anspruch 1, wobei die zweite Vorspannvorrichtung eine Schraubenfeder (192) umfaßt, die den ersten zylindrischen Abschnitt (186) der Reibungsplatte umgibt und gegen eine zur Achse weisende Oberfläche (196) auf dem zweiten zylindrischen Abschnitt (188) der Reibungsplatte drückt.

5. Riemenspanneinrichtung nach Anspruch 3, umfassend eine Vorrichtung zum Befestigen des Reibungsbauteils (198) entweder an der Reibungsplatte (184) oder am Spannarm (130).

6. Riemenspanneinrichtung nach Anspruch 3, wobei das Reibungsbauteil ein Kunstharzmaterial ist.

7. Riemenspanneinrichtung nach Anspruch 1, wobei die erste Vorspannvorrichtung eine Schraubenfeder (140) umfaßt, die die zweite Vorspannvorrichtung (192) umgibt.

## Revendications

1. Appareil de tension d'une courroie d'entraînement (12), l'appareil comprenant :
un bras tendeur (130) ayant une poulie folle (132) sur celui-ci, destinée à coopérer avec une surface de la courroie d'entraînement,
un premier dispositif (134, 154) de montage du bras tendeur sur un support (145) afin qu'il puisse pivoter dans un premier et un second sens opposés par rapport au support,
un premier dispositif (140) de rappel du bras tendeur dans l'un des premier et second sens,
une plaque de frottement (184),
un second dispositif destiné au montage de la plaque de frottement sur le premier dispositif de montage (134, 154) afin qu'il puisse se déplacer axialement par rapport à ce dernier, et à la fixation de la plaque de frottement afin qu'elle ne puisse pas tourner par rapport au premier dispositif de montage, et
un second dispositif (192) indépendant du premier dispositif de rappel (140) et destiné à rappeler la plaque de frottement axialement vers une partie du bras tendeur afin que le pivotement du bras tendeur soit amorti, caractérisé en ce que
la plaque de frottement a une configuration cylindrique à gradin ayant une première partie cylindrique (186) d'un premier diamètre et une seconde partie cylindrique (188) d'un second diamètre qui est supérieur au premier diamètre, le second dispositif de montage portant la première partie cylindrique (186) sur le premier dispositif de montage (134, 154), et la seconde partie cylindrique (188) de la plaque de frottement a une surface annulaire tournée axialement et qui est repoussée axialement vers la partie du bras tendeur par le second dispositif de rappel (192).

2. Appareil de tension de courroie selon la revendication 1, dans lequel le premier dispositif de rappel comporte un ressort hélicoïdal (140) formé d'un morceau de fil métallique de section non circulaire.

3. Appareil de tension de courroie selon la revendication 1, comprenant un élément de frottement (198) disposé entre la plaque de frottement (184) et la partie du bras tendeur.

4. Appareil de tension de courroie selon la revendication 1, dans lequel le second dispositif de rappel comporte un ressort hélicoïdal (192) qui entoure la première partie cylindrique (186) de la plaque de frottement et qui est en appui contre une surface (196) tournée axialement sur la seconde partie cylindrique (188) de la plaque de frottement.

5. Appareil de tension de courroie selon la revendication 3, comprenant un dispositif de fixation de l'élément de frottement (198) à la plaque de frottement (184) ou au bras tendeur (130).

6. Appareil de tension de courroie selon la revendication 3, dans lequel l'élément de frottement est une matière à base d'une résine.

7. Appareil de tension de courroie selon la revendication 1, dans lequel le premier dispositif de rappel comprend un ressort hélicoïdal (140) qui entoure le second dispositif de rappel (192).
